# EUROPÄISCHE PATENTSCHRIFT

(11) **EP 1 360 821 B1**
(45) Veröffentlichungstag und Bekanntmachung des Hinweises auf die Patenterteilung: **23.04.2008**
(21) Anmeldenummer: 02706624.0
(22) Anmeldetag: 23.01.2002
(51) Int. Cl.: H04L 29/12

(54) **VERFAHREN UND ANORDNUNG ZUM ERMITTELN DER INTERNETPROTOKOLLADRESSE EINER ENDGERÄTEANORDNUNG**
METHOD AND ARRAY FOR DETERMINING INTERNET PROTOCOL ADDRESSES OF A TERMINAL ARRAY
PROCEDE ET DISPOSITIF POUR DETERMINER L'ADRESSE IP D'UN ENSEMBLE DE TERMINAUX

(30) Priorität: 13.02.2001 DE 10106619; 20.06.2001 DE 10129791
(43) Veröffentlichungstag der Anmeldung: 12.11.2003
(73) Patentinhaber: Nokia Siemens Networks GmbH & Co. KG, 81541 München (DE)
(72) Erfinder: HELD, Walter, 82538 Geretsried (DE); MENDISCH, Volker, 82223 Eichenau (DE)
(86) Internationale Anmeldenummer: PCT/DE2002/000224
(87) Internationale Veröffentlichungsnummer: WO 2002/065726

(56) Entgegenhaltungen:
- WO-A-96/39769
- US-A- 6 012 088
- US-A- 6 073 178

## Beschreibung

Die Erfindung betrifft ein Verfahren zum Ermitteln einer IP-Adresse, die einer über eine Teilnehmeranschlußleitung eines Telekommunikationsnetzes an ein IP-Netz angeschlossenen Endgeräteanordnung eindeutig zugeordnet ist und eine für ein solche Verfahren geeignete Anordnung.

In einem Internetprotokollnetz oder IP-Netz (englisch: IP NETWORK) also in einem Netz, das das TCP/IP-Protokoll verwendet, benötigen jede Netzeinrichtung und jede Endgeräteanordnung eine eindeutige Internetprotokolladresse oder IP-Adresse. Eine IP-Adresse, die aus einer Netzadresse und einer Geräteadresse erstellt wird, besteht in der IP Version 4 (Ipv4) aus vier Zahlen (Oktetten), die jeweils durch einen Punkt getrennt sind, zum Beispiel 204.107.64.2. In späteren IP Versionen werden mehr Oktetten für die IP-Adresse verwendet. IP-Adressen können manuell erstellt werden und einer Endgeräteanordnung in einem Netz fest zugeordnet werden. Eine manuelle Konfiguration eines IP-Netzes ist jedoch aufwendig und nur für kleinere, selten veränderte Teilnetze interessant.

Zur Automatisierung der IP-Adressenzuordnung verwenden Netzbetreiber daher üblicherweise ein sogenanntes BOOTSTRAP-Protokoll BOOTP oder ein dynamisches Host-Konfigurierungsprotokoll (englisch: DYNAMIC HOST CONFIGURATION PROTOCOL) DHCP. BOOTP ist ein TCP/IP-Protokoll, mit dessen Hilfe Endegeräteanordnungen ihre IP-Adresse oder andere Netzinformationen, wie Server-Adressen und Gateway-Informationen ermitteln können. Beim Starten einer Endgeräteanordnung wird von dieser in einem UDP-Paket (englisch: USER DATA PROTOCOL, ein nicht zuverlässiges TCP/IP-Protokoll) eine Anfrage BOOTP REQUEST an den BOOTP-Server übermittelt, der die benötigte IP-Adresse mit einer Meldung BOOTP-RESPONSE zurücksendet. Hierbei verwenden die BOOTP-REQUEST- und BOOTP-RESPONSE-Meldungen eine IP-Rundsendefunktion (IP BROADCAST), mit der Meldungen gesendet werden können, bevor die spezifische IP-Adresse bekannt ist. Ein solches Verfahren ist beispielsweise in der US 6,115,545 im Detail beschrieben.

DHCP ist ebenfalls eine Software zum automatischen Zuteilen von IP-Adressen an Endgeräteeinrichtungen, die in einem TCP/IP-Netz einloggen. DHCP-Software läuft üblicherweise auf Servern und ein solcher DHCP-Server ist beispielsweise in US 5,884,024 beschrieben. DHCP unterscheided sich von BOOTP vor allem darin, daß eine einmal vergebene IP-Adresse gespeichert wird und bei späteren DHCP Request-Meldungen wieder vergeben wird.

Die Publikation WO96/39769 offenbart ein Verfahren zum Ermitteln einer IP-Adresse, die einer über eine Teilnehmeranschlußleitung eines Telekommunikationsnetzes an ein IP-Netz angeschlossenen Endgeräteanordnung eindeutig zugeordnet ist.

BOOTP-Server oder DHCP-Server benötigen zum Vergeben einer IP-Adresse eine Hardware-Adresse einer Endgeräteanordnung, die von der Netzschnittstelle dieser Endgeräteanordnung in der IP-Adressenanfragemeldung, z.B.BOOTP REQUEST, zum entsprechenden Server übermittelt wird. In Netzen nach dem ETHERNET-Standard wird die Hardware-Adresse (MAC-Adresse) der die Netzschnittstelle bildenden Ethernet-Karte als eindeutig zuordenbare Kennung für jede IP-Adressenanfrage und IP-Adressenantwort (BOOTP REQUEST, BOOT RESPONSE) verwendet.

Endgeräteanordnungen im hier behandelten Sinne sind z.B. Netzcomputer mit Ethernet-Karte oder mit Modem als Netzschnittstelle. Insbesondere sind mit Endgeräteanordnung jedoch auch Netzabschlußeinheiten gemeint, die nach dem englischsprachigen Begriff INTEGRATED ACCESS DEVICE als IAD bezeichnet werden. Ein solches IAD ist eine Netzabschlußeinheit zum Multiplexen verschiedener Kommunikationstechniken auf der Teilnehmerseite auf einen einzelnen Telekommunikationsnetzanschluß. Das IAD demultiplext auch die vom Netz kommenden Datenströme in die zugehörigen Kanäle. Ein Telekommu-nikationsnetzanschluß zum Anschließen eines IAD kann ein analoger Telefonanschluß sein, aber auch ein ISDN-Anschluß, ein DSL-Anschluß oder ein T1-Anschluß. Die derzeit häufigste Anwendung von IAD-Einheiten ist das Multiplexen von Sprache und Daten über einen DSL-Anschluß. DSL (englisch: DIGITAL SUBSCRIBER LINE) bezeichnet einen digitalen Teilnehmeranschluß, der nicht wie ein ISDN-Anschluß vermittlungstechnisch aktiviert wird, sondern dauerhaft angeschlossen ist und über eine zentrale Netzeinrichtung, einen Teilnehmeranschlußleitungszugangsmultiplexer DSLAM (englisch: DSL ACCESS MULTIPLEXER) mit Sprachinformation und Dateninformation versorgt wird. Von einem solchen DSLAM, der meist Teil eines peripheren Netzknotens ist, gehen die digitalen Teilnehmeranschlußleitungen DSL eines bestimmten lokalen Bereiches aus und oft ist für jede Teilnehmeranschlußleitung in dem DSLAM ein spezifischer Teilnehmeranschlußdatensatz (englisch: Port data) gespeichert und von einem zentralen Netzmanagement konfigurierbar.

Zum zentralen Managen von Endgeräteanordnungen, wie z.B. IADs in einem IP-Netz, kann ein Netzbetreiber beispielsweise SNMP über IP nutzen. SNMP steht für den englischsprachigen Ausdruck SIMPLE NETWORK MANAGEMENT PROTOCOL. Hierbei handelt es sich um ein weit verbreitetes Netzbeobachtungs- und Steuerprotokoll. Um eine Endgeräteanordnung zu managen, muß der Netzbetreiber der zugeordneten Netzmanagementschnittstelle eine statische IP-Adresse zuordnen, die zum Austausch von Netzmanagementmeldungen verwendet werden kann. Darüber hinaus müssen auch die IP-Router und das Netzmanagementsystem innerhalb des IP-Netzes des Netzbetreibers diese IP-Adresse kennen. Hierzu verwenden Netzbetreiber eines der Protokolle BOOTP oder DHCP in oben erwähnter Weise. Die eindeutige Kennung zum Festlegen einer IP-Adresse in einem BOOTP-Server oder DHCP-Server ist die Hardware-Adresse der Endgeräteanordnung.

Beim Einrichten einer Endgeräteanordnung muß der Netzbetreiber die erforderliche Information im BOOTP-Server mit der Hardware-Adresse der Internetprotokollschnittstelle der entsprechenden Netzanordnung der verwendeten Endgeräteanordnung eingeben. Hierzu ist entweder die manuelle Eingabe der exakten Hardware-Adresse der Endgeräteanordnung durch den Teilnehmer vor dem Einrichten erforderlich, oder der Teilnehmer muß die Hardware-Adresse via Telefon oder Post beim Netzbetreiber registrieren, nachdem die Endgeräteanordnung beim Teilnehmer eingerichtet worden ist. Wenn beispielsweise der Teilnehmer die Endgeräteanordnung nicht vom Netzbetreiber erhalten hat, sondern im Handel erwirbt, ist eine Registrierung der Hardware-Adresse der Endgeräteanordnung durch den Teilnehmer die derzeit einzige Lösung. Die beiden erwähnten Möglichkeiten der Registrierung sind sehr arbeitsaufwendig, erfordern Koordination zwischen Teilnehmer und Netzbetreiber, sind fehleranfällig und können zu ungewünschten Verzögerungen der Diensteverfügbarkeit führen, nachdem die Endgeräteanordnung beim Teilnehmer installiert worden ist.

Aufgabe der Erfindung ist es, ein vorteilhafteres Verfahren zum Zuordnen von IP-Adressen für Endgeräteanordnungen anzugeben sowie hierzu geeignete Anordnngen.

Ein erfindungsgemäßes Verfahren zum Ermitteln einer IP-Adresse, die einer über eine Teilnehmeranschlußleitung eines Telekommunikationsnetzes an ein IP-Netz angeschlossenen Endgeräteanordnung eindeutig zugeordnet ist, hat folgende Verfahrensschritte:
- von einer Netzmanagementeinrichtung des IP-Netzes wird eine dem Teilnehmeranschluß der Endgeräteanordnung fest zugeordnete Kennung zugeteilt;
- diese Kennung des Teilnehmeranschlusses wird im Peripheriebereich des Telekommunikationsnetzes gespeichert;
- diese gespeicherte Kennung wird von der Endgeräteanordnung in einer IP-Adreßanforderungsmeldung an eine Netzmanagementeinheit zum Zuweisen von IP-Adressen übermittelt;
- die Netzmanagementeinheit zum Zuweisen von IP-Adressen weist unter Verwendung der Kennung des Teilnehmeranschlusses eine IP-Adresse zu, und
- die Netzmanagementeinheit sendet diese IP-Adresse an die Endgeräteanordnung.

Das Zuteilen der dem Teilnehmeranschluß fest zugeordneten Kennung kann beispielsweise beim Einrichten der Teilnehmeranschlüsse durch Konfigurieren der Teilnehmeranschlußleitungskarte in einem Netzelement im Peripheriebereich eines Telekommunikationsnetzes oder in einem Teilnehmeranschlußleitungszugangsmultiplexer erfolgen. Die Kennung kann auch mit Hilfe eines Netzmanagementprotokolls, wie SNMP, zugeteilt werden und im Peripheriebereich des Telekommunikationsnetzes in einem Netzelement mit bereits bekannter IP-Adresse gespeichert werden. Bezüglich der Zuteilung der Kennung ist die Netzmanagementeinrichtung nicht zwangsläufig identisch mit der Einrichtung, in der sich die Netzmanagementeinheit zum Zuweisen von IP-Adressen befindet. Vielmehr ist eine Netzmanagementfunktion gemeint, die sowohl zentral als auch dezentral in bekannter Weise realisiert werden kann.

Ein vorstehend erwähntes Netzelement im Peripheriebereich eines Telekommunikationsnetzes kann beispielsweise ein Teilnehmeranschlußleitungssatz sein, über den Teilnehmeranschlußleitungen mit einer Vermittlungseinrichtung verbindbar sind. In einem solchen Teilnehmeranschlußleitungssatz, wie auch in einem Teilnehmeranschlußleitungszugangsmultiplexer, werden die einzelnen Teilnehmeranschlüsse konfiguriert und für jeden Teilnehmeranschluß ist ein Teilnehmeranschlußleitungsdatensatz gespeichert. Peripheriebereich im hier verwendeten Sinne bedeutet, im Bereich von Teilnehmeranschlußleitungen, also netzseitige oder teilnehmerseitige Einheiten, die bestimmten Teilnehmeranschlußleitungen zuordenbar sind. Falls Teilnehmeranschlußleitungen unmittelbar von einer zentralen Einheit eines Telekommunikationsnetzes aus konfiguriert sind, kann die zugeteilte Kennung auch in einer solchen zentralen Einheit gespeichert werden.

Das Speichern der Kennung des Teilnehmeranschlusses im Peripheriebereich eines Telekommunikationsnetzes kann bedeuten, Speichern in einem mehreren Teilnehmeranschlußleitungen zugeordnetem Netzelement, wie z.B. einem Teilnehmeranschlußleitungssatz oder einem Teilnehmeranschlußzugangsmultiplexer. Hier könnte diese Kennung jedes Teilnehmeranschlusses z.B. als Teil des Teilnehmeranschlußdatensatzes dieses Teilnehmeranschlusses gespeichert sein. In diesem Fall muß diese Kennung zusätzlich zur Endgeräteanordnung übermittelt werden, damit diese Endgeräteanordnung die Kennung in einer IP-Adreßanforderungsmeldung verwenden kann.

Die Kennung des Teilnehmeranschlusses kann auch auf der Endgeräteseite einer Teilnehmeranschlußleitung gespeichert werden, beispielsweise in einer Netzabschlußeinheit. Eine solche Netzabschlußeinheit dient dem Umsetzen der von einzelnen Endgeräten der Endgeräteanordnung verarbeitbaren Protokolle und Datenformate in die auf der Teilnehmeranschlußleitung übertragbaren Protokolle und Datenformate und gegebenenfalls zum Multiplexen und Demultiplexen der Daten einzelner Informationsarten. Eine solche Netzabschlußeinheit kann als Teil des Telekommunikationsnetzes angesehen werden, ist aber auch der Endgeräteanordnung zuzuordnen. Eine Ausgestaltungsform eines erfindungsgemäßen Verfahrens sieht vor, daß die dem Teilnehmeranschluß fest zugeordnete Kennung, z.B. unter Verwendung von Netzmanagementfunktionen, unmittelbar in der Netzabschlußeinheit dieses Teilnehmeranschlusses permanent gespeichert wird. Hierbei wäre von Vorteil, daß die Kennung der Endgeräteanordnung unmittelbar zur Verfügung steht, um eine IP-Adreßanforderungsmeldung abzusenden. Außerdem wäre weniger Signalisierung auf der Teilnehmeranschlußleitung erforderlich. Nachteilig wäre, daß bei Austausch der Netzabschlußeinheit infolge eines Defektes eine neue Konfiguration erforderlich würde.

In einer anderen Ausgestaltungsform eines erfindungsgemäßen Verfahrens, bei dem die dem Teilnehmeranschluß zugeordnete Kennung in einem mehreren Teilnehmeranschlüssen zugeordneten Netzelement, z.B. einem Teilnehmeranschlußleitungssatz, gespeichert wird, wird diese gespeicherte Kennung beim Initialisieren der Endgeräteanordnung, beispielsweise beim Aktivieren der Netzabschlußeinheit auf der Endgeräteseite, zur Endgeräteanordnung übermittelt. In diesem Fall ist zu empfehlen, die Kennung zumindest temporär auch in der Endgeräteanordnung zu speichern, um sie zu jedem Zeitpunkt für eine IP-Adreßanforderungsmeldung zur Verfügung zu haben.

Ein Vorteil eines erfindungsgemäßen Verfahrens ist, daß zeitgleich mit dem Zuordnen einer Kennung zu einem Teilnehmeranschluß, z.B. beim Konfigurieren einer peripheren Netzeinheit, auch das Generieren einer dynamischen IP-Adresse und das Zuordnen dieser zu der genannten Kennung in der Einheit zum Vergeben von IP-Adressen im Netzmanagementsystem erfolgen kann. Falls diese Einheit zum Vergeben von IP-Adressen im Netzmanagementsystem ein DHCP-Server ist, kann hierbei auch schon die in Zukunft bei IP-Adressanforderungen zu vergebende IP-Adresse fest zugeordnet werden. Hierzu wird die eindeutige Kennung beim Konfigurieren des zugeordneten Teilnehmeranschlusses im Peripheriebereich des Telekommunikationsnetztes gespeichert und in der Netzmanagementeinheit zum Zuweisen von IP-Adressen.

Eine Endgeräteanordnung mit einer Kommunikationsschnittstelle zum Anschließen über eine Teilnehmeranschlußleitung eines Telekommunikationsnetzes an ein IP-Netz hat eine Kennungsspeicheranordnung zum Speichern einer eindeutigen Kennung. Eine solche Endgeräteanordnung gemäß der vorliegenden Erfindung hat eine Steuerung zum Empfangen einer eindeutigen Kennung über die Kommunikationsschnittstelle von einem peripheren Netzelement des Telekommunikationsnetzes. Darüber hinaus dient die Steuerung einer solchen Endgeräteanordnung dem Speichern der empfangenen Kennung in der Kennungsspeichereinrichtung und zum Senden einer IP-Adreßanforderungsmeldung unter Verwendung dieser gespeicherten Kennung über die Kommunikationsschnittstelle zu einer Netzmanagementeinrichtung des IP-Netzes.

Eine solche Endgeräteanordnung kann beispielsweise ein H.323-Videotelefon sein mit einer an die Teilnehmeranschlußleitung angepaßten Kommunikationsschnittstelle. Es kann sich auch um einen Computer mit entsprechender Kommunikationsschnittstelle handeln. Darüber hinaus kann eine solche Endgeräteanordnung aus einer Netzabschlußeinheit zum Multiplexen verschiedener Kommunikationstechniken bestehen, an die bedarfsweise Datenendgeräte, Sprachendgeräte, Videoendgeräte oder Kombinationen hiervon angeschlossen sind oder anschließbar sind. Bezüglich der erfindungsgemäßen Funktion wäre dann die Netzabschlußeinheit die minimale Ausbaustufe einer solchen erfindungsgemäßen Endgeräteanordnung.

Im Gegensatz zu einer üblichen Endgeräteanordnung, die eine IP-Adreßanforderungsmeldung unter Verwendung einer vom Gerätehersteller in einen Hardware-Kennungsspeicher gespeicherten Hardware-Kennung zum Managementsystem des IP-Netzes sendet, kann ein erfindungsgemäßes Endgerät eine Kennung über die Kommunikationsschnittstelle vom Telekommunikationsnetz empfangen. Diese Kennung kann beispielsweise von einer Netzeinheit des Telekommunikationsnetzes während der Initialisierungsphase der Kommunikationsschnittstelle übermittelt werden. Eine erfindungsgemäße Endgeräteanordnung verwendet die über die Kommunikationsschnittstelle empfangene Kennung zum Bilden einer IP-Adreßanforderungsmeldung. Sofern eine IP-Adresse der Einheit, in der die Kennung gespeichert werden soll, bekannt ist (z. B. bei Speicherung der Kennung in einem DSLAM), kann die Kennung auch mit Hilfe einer Netzmanagementfunktion, beispielsweise SNMP über IP, von einer Netzmanagementeinrichtung übermittelt werden.

In einer besonders günstigen Ausgestaltungsform einer erfindungsgemäßen Endgeräteanordnung ist ein Hardware-Kennungsspeicher mit fest vorgegebener Hardware-Kennung vorgesehen und eine erfindungsgemäße Kennungsspeichereinrichtung zum Speichern einer zugeteilten Kennung. Eine solche Endgeräteanordnung hat eine Steuerung zum Prüfen, ob in der Kennungsspeichereinrichtung eine eindeutige Kennung gespeichert ist. Kann diese Steuerung keine eindeutige zugeteilte Kennung als gespeichert ermitteln, veranlaßt sie eine IP-Adreßanforderungsmeldung unter Verwendung der fest vorgegebenen Hardware-Kennung. Ein Vorteil einer solchen Endgeräteanordnung ist, daß sie sowohl in IP-Netzen eingesetzt werden kann, die das Zuteilen einer Kennung für jeden Teilnehmeranschluß vorsehen, als auch in IP-Netzen, die eine fest vorgegebene Hardware-Kennung verwenden.

Da die vom Netzmanagement zugeteilte Kennung beim Ermitteln einer IP-Adresse anstatt einer Hardware-Kennung oder Hardwareadresse verwendet wird, kann die zugeteilte Kennung auch allgemein, wie bei der Beschreibung des Ausführungsbeispiels, als Pseudo-Hardwareadresse bezeichnet werden.

Ein Teilnehmeranschlußleitungszugangsmultiplexer zum Versorgen von digitalen Teilnehmeranschlußleitungen mit gemultiplexter Information hat erfindungsgemäß eine Speicheranordnung zum teilnehmeranschlußspezifischen Speichern einer Teilnehmeranschlußkennung. Außerdem ist eine Steuerung vorgesehen, um gesteuert von einer Netzmanagementeinheit eine teilnehmeranschlußspezifische Kennung in diese Speicheranordnung zu speichern und um beim Initialisieren einer teilnehmerseitigen Netzabschlußeinheit die gespeicherte teilnehmeranschlußspezifische Kennung an diese Netzabschlußeinheit zu übermitteln. Ein solcher Teilnehmeranschlußleitungszugangsmultiplexer ermöglicht ein einfaches zentrales Konfigurieren eines Netzes unabhängig von der teilnehmerseitigen Hardware.

Nachstehend wird die Erfindung anhand von besonders günstigen Ausführungsbeispielen unter Bezugnahme auf die Figur näher erläutert.
Es zeigt:
Figur 1 in schematischer Blockdarstellung Komponenten eines Internetprotokollnetzes, in dem ein erfindungsgemäßes Verfahren anwendbar ist;
Figur 2 in schematischer Darstellung den Ablauf einer besonders günstigen Ausgestaltungsform eines erfindungsgemäßen Verfahrens unter Bezugnahme auf eine Netzkonstellation gemäß Figur 1;
Figur 3 in schematischer Blockdarstellung eine besonders günstige Ausgestaltungsform einer erfindungsgemäßen Endgeräteanordnung und eines erfindungsgemäßen Teilnehmeranschlußleitungszugangsmultiplexers.

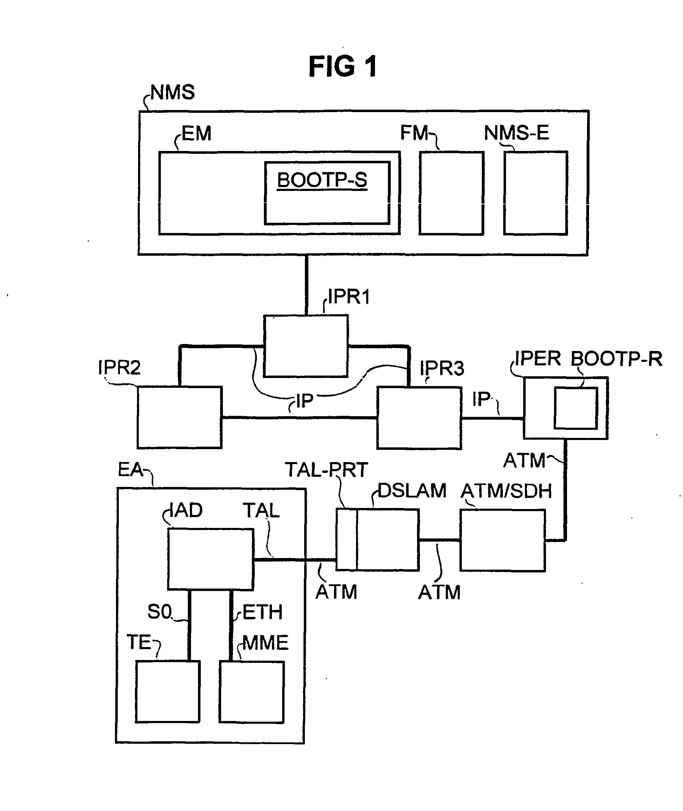

Figur 1 zeigt ein Netzmanagementsystem NMS eines Internetprotokollnetzes mit einer Elementenmanagementeinheit EM, einer Fehlermanagementeinheit FM und einer von einer Bedienperson zu bedienenden Netzmanagementsystemeingabeeinheit NMS-E. Die Elementenmanagementeinheit EM enthält neben nicht gesondert dargestellten Untereinheiten u.a. einen Bootstrap-Protokollserver BOOTP-S. Das Netzmanagementsystem NMS ist über eine LAN-Verbindung mit einem Internetprotokolldatennetz verbunden, das durch drei Internetprotokollrouter IPR1, IPR2 und IPR3 sowie einen Netzübergangsinternetprotokollrouter IPER dargestellt ist. Zwischen den Routern IPR1, IPR2, IPR3 und IPER dieses Netzbereiches wird Information auf der Basis des Internetprotokolls IP ausgetauscht.

Der Netzübergangsinternetprotokollrouter IPER, der gemäß dem engschlischsprachigen Ausdruck EDGE DEVICE auch als EDGE-ROUTER bezeichnet wird, ist mit einer nicht dargestellten ATM-Karte ausgerüstet und ermöglicht somit den Übergang von dem Internetprotokollnetz in ein Telekommunikationsnetz mit Informationsaustausch auf der Basis des Asynchron-Transfer-Modus ATM. Im dargestellten Ausführungsbeispiel ist der Netzübergangsprotokollrouter IPER an ein ATM-Netz gemäß dem Standard ATM/SDH angeschlossen, zu dessen Peripheriebereich ein Teilnehmeranschlußleitungszugangsmultiplexer DSLAM gehört. Der Netzübergangsprotokollrouter IPER enthält eine Bootstrap-Protokollrelaisfunktion BOOTP-R, die unter anderem für das Zustellen von Bootstrap-Protokollmeldungen an Netzelemente DSLAM, Endgeräteanordnungen EA und das Netzmanagementsystem NMS zuständig ist. Da der Netzübergangsinternetprotokollrouter IPER die Funktion eines Internetprotokollrelais übernimmt, wird er auch Relaisrouter IPER genannt.

Der Teilnehmeranschlußleitungszugangsmultiplexer DSLAM hat Teilnehmeranschlußleitungsports TAL-PRT, von denen Teilnehmeranschlußleitungen TAL ausgehen. In der Figur ist nur eine Teilnehmeranschlußleitung TAL gezeigt, die mit einer Netzabschlußeinheit IAD einer Endgeräteanordnung EA verbunden ist. Zwischen dem Netzübergangsprotokollrouter IPER und der Netzabschlußeinheit IAD, wie auch zu jeder anderen, in der Figur nicht dargestellten Netzabschlußeinheit IAD sind permanente virtuelle ATM- Verbindungen, sogenannte ATM-PVCs, eingerichtet. Über diese virtuellen ATM-Verbindungen können von dem Netzübergangsinternetprotokollrouter IPER zu den Netzabschlußeinheiten IAD Informationen und Steuerbefehle des Netzmanagementsystems NMS auf der Grundlage des oben erwähnten Protokolls SNMP übermittelt werden. Der Netzübergangsinternetprotokollrouter IPER hat bezüglich der Managementkanäle zwischen dem Netzmanagementsystem NMS und den Netzabschlußeinheiten IAD nur eine vermittlungstechnische Funktion.

Die in Figur 1 dargestellte Endgeräteanordnung EA besteht neben der Netzabschlußeinheit IAD noch aus einem Telefonieendgerät TE, das über eine S0-Schnittstelle S0 mit der Netzabschlußeinheit IAD verbunden ist. Außerdem ist ein Multimedia-Endgerät MME vorgesehen, das über eine Ethernet-Schnittstelle ETH mit der Netzabschlußeinheit IAD verbunden ist.

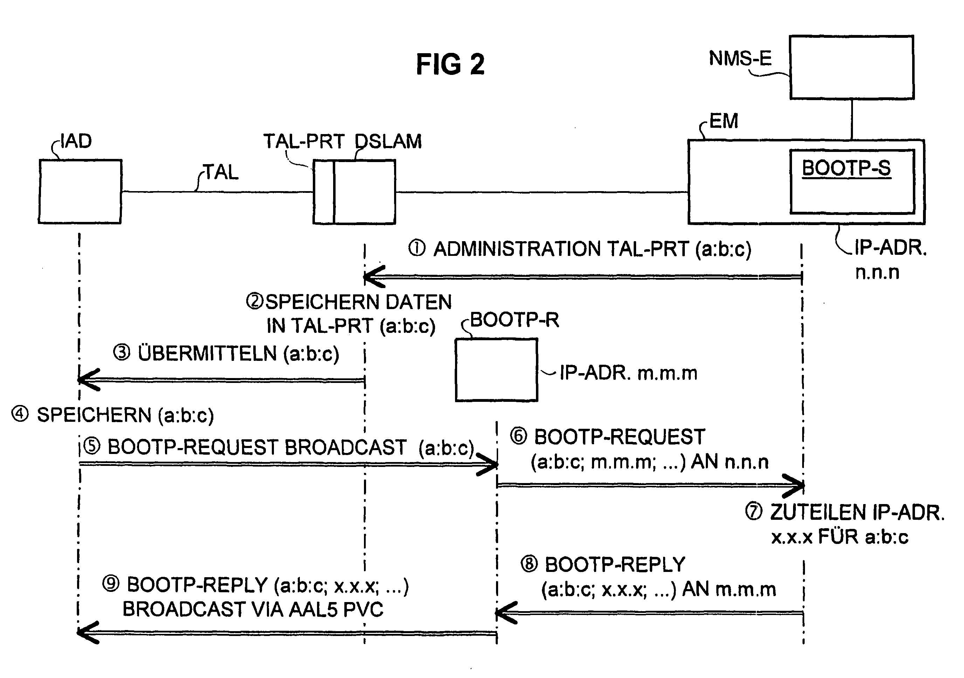

Figur 2 zeigt einige Komponenten aus Figur 1, sowie Verfahrensschritte einer besonders günstigen Ausgestaltungsform eines erfindungsgemäßen Verfahrens. Im einzelnen zeigt Figur 2 die Netzmanagementsystemeingabeeinheit NMS-E, die Elementenmanagementeinheit EM mit dem Bootstrap-Protokollserver BOOTP-S und der Internetprotokolladresse n.n.n, die Bootstrap-Protokollrelaisfunktion BOOTP-R des Netzübergangsprotokollrouters mit der Internetprotokolladresse m.m.m, den Teilnehmeranschlußleitungszugangsmultiplexer DSLAM mit dem Teilnehmeranschlußleitungsport TAL-PRT, die Teilnehmeranschlußleitung TAL sowie die Netzabschlußeinheit IAD.

Schritt 1 in dem Verfahren nach Figur 2 ist die Administration des Teilnehmeranschlußleitungsports TAL-PRT durch Eingabe einer Bedienperson an der Netzmanagementsystemeingabeeinheit NMS-E und Übermitteln dieser Eingaben einschließlich einer Pseudo-Hardwareadresse a:b:c des Teilnehmeranschlusses über einen virtuellen ATM-Kanal zu dem Teilnehmeranschlußleitungszugangsmultiplexer DSLAM.
Schritt 2 bedeutet das Speichern der Teilnehmeranschlußleitungsportdaten in dem Teilnehmeranschlußleitungsport TAL-PRT des DSLAM einschließlich der Pseudo-Hardwareadresse a:b:c.
In Schritt 3 wird die Pseudo-Hardwareadresse a:b:c von dem DSLAM, beispielsweise in der Initialisierungsphase der Netzabschlußeinheit IAD zu der Netzabschlußeinheit IAD übermittelt.
In Schritt 4 wird die Pseudo-Hardwareadresse a:b:c in der Netzabschlußeinheit IAD gespeichert.
In Schritt 5 sendet die Netzabschlußeinheit IAD mit Hilfe einer Broadcast-Funktion eine IP-Adreßanforderungsmeldung BOOTP REQUEST mit der Pseudo-Hardwareadresse a:b:c zu der Bootstrap-Protokollrelaisfunktion BOOTP-R.
In Schritt 6 sendet die Bootstrap-Protokollrelaisfunktion BOOTP-R eine IP-Adreßanforderungsmeldung BOOTP REQUEST mit der Pseudo-Hardwareadresse a:b:c und mit ihrer eigenen Internetprotokolladresse m.m.m an die Internetprotokolladresse n.n.n des Netzmanagementsystems NMS, insbesondere zum Bootstrap-Protokollserver BOOTP-S.
In Schritt 7 teilt der Bootstrap-Protokollserver BOOTP-S der Netzabschlußeinheit IAD die Internetprotokolladresse x.x.x für die Hardware-Adresse a:b:c zu.
In Schritt 8 wird diese Internetprotokolladresse x.x.x mit der Pseudo-Hardwareadresse a:b:c und zusätzlicher Serverinformation in einer Bootstrap-Protokollantwortmeldung BOOTP REPLY an die Internetprotokolladresse m.m.m der Bootstrap-Protokollrelaisfunktion BOOTP-R übermittelt. Die Bootstrap-Protokollrelaisfunktion BOOTP-R sendet diese empfangene Meldung mit Hilfe einer Broadcast-Übertragung über die virtuelle ATM-Verbindung AAL5 PVC in einem neunten Schritt an die Netzabschlußeinheit IAD.

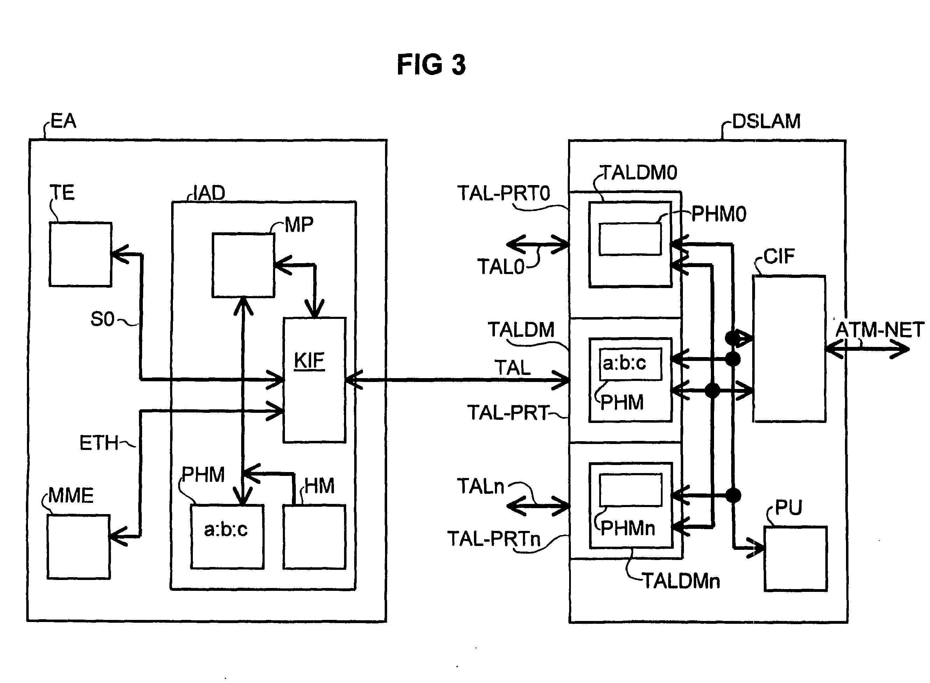

Figur 3 zeigt eine Endgeräteanordnung EA, die wie die Endgeräteanordnung EA in Figur 1 ein Telefonieendgerät TE enthält, das über eine S0-Schnittstelle S0 mit einer Netzabschlußeinheit IAD in der Endgeräteanordnung EA verbunden ist und ein Multimediaendgerät MME, das über eine Ethernet-Schnittstelle ETH mit der Netzabschlußeinheit IAD verbunden ist. In der Netzabschlußeinheit IAD in Figur 3 ist außerdem eine Kommunikationsschnittstelle KIF dargestellt, an die eine Teilnehmeranschlußleitung TAL angeschlossen ist und die eine Ethernet-Schnittstelle ETH zum Anschließen des Multimediaendgerätes MME hat sowie eine S0-Schnittstelle S0 zum Anschließen des Telefonieendgerätes TE. Darüber hinaus steht die Kommunikationsschnittstelle KIF mit einer Steuereinheit MP in Verbindung. Die Kommunikationsschnittstelle KIF hat die Aufgabe, auf der Teilnehmeranschlußleitung TAL empfangene Informationen und Befehle an die Einheiten TE, MME und MP der Endgeräteanordnung EA weiterzuleiten, die diese Informationen bzw. Befehle verarbeiten können, und hierzu erforderliche Formatumwandlungen und Demultiplexvorgänge auszuführen. In gleicher Weise soll die Kommunikationsschnittstelle KIF von den einzelnen Einheiten TE, MME, MP der Endgeräteanordnung EA empfangene Informationen oder Befehle gegebenenfalls multiplexen und in ihrem Format umformen, so daß diese auf der Teilnehmeranschlußleitung TAL zu einem in der Figur 3 nur die Teilnehmeranschlußleitung TAL, einen Teilnehmeranschlußleitungszugangsmultiplexer DSLAM und eine einseitig offene Verbindung ATM-NET dargestellten Telekommunikationsnetz übertragen zu können. Die Steuereinheit MP der Netzabschlußeinheit IAD, die üblicherweise durch eine Prozessoreinheit mit entsprechenden Programmbefehlen realisiert wird, steuert die Kommunikationsschnittstelle KIF und steht in Schreib/Leseverbindung mit einem Pseudo-Hardwareadreßspeicher PHMx, in den eine Pseudo-Hardwareadresse a:b:c einschreibbar ist. Außerdem steht die Steuereinheit MP in Leseverbindung mit einem Hardwareadreßspeicher HM.

Der in Figur 3 dargestellte Teilnehmeranschlußleitungszugangsmultiplexer DSLAM hat Teilnehmeranschlußleitungsports TAL-PRTO, TAL-PRT, TAL-PRTn, an die jeweils eine Teilnehmeranschlußleitung TAL0, TAL, TALn angeschlossen ist. Jeder der Teilnehmeranschlußleitungsports TAL-PRT0, TAL-PRT, TAL-PRTn hat eine Pseudo-Hardwareadreßspeichereinrichtung PHM0, PHM, PHMn als Teil einer Teilnehmeranschlußleitungsdatensatzspeichereinrichtung TALDM0, TALDM, TALDMn. In der Pseudo-Hardwareadreßspeichereinrichtung PHM des Teilnehmeranschlußleitungsports TAL-PRT0 zum Anschließen der Teilnehmeranschlußleitung TAL ist die Pseudo-Hardwareadresse a:b:c eingespeichert. Der Teilnehmeranschlußleitungszugangsmultiplexer DSLAM enthält auch eine Kommunikationsschnittstelle CIF, über die die einzelnen Teilnehmeranschlußleitungsports TAL-PRT0, TAL-PRT, TAL-PRTn an das zentrale, nicht im einzelnen dargestellte Telekommunikationsnetz ankoppelbar sind. Die Kommunikationsschnittstelle CIF dient hierbei dem Anpassen der Daten und Meldungsformate sowie gegebenenfalls dem Multiplexen und Demultiplexen von Informations- und Steuerungsdaten.

Der Teilnehmeranschlußleitungszugangsmultiplexer DSLAM enthält außerdem eine Steuereinheit PU zum Steuern der Kommunikationsschnittstelle CIF und der Teilnehmeranschlußleitungsports TAL-PRT0, TAL-PRT, TAL-PRTn.

Die besonders günstige Ausgestaltungsform eines Teilnehmeranschlußleitungszugangsmultiplexers DSLAM, wie er in Figur 3 dargestellt ist, empfängt über ein Telekommunikationsnetz ATM-NET eine Managementfunktion zum Zuordnen von Pseudo-Hardwareadressen zu bestimmten Teilnehmeranschlußleitungen einschließlich einer Pseudo-Hardwareadresse a:b:c für eine Teilnehmeranschlußleitung TAL. Die Steuereinheit PU des Teilnehmeranschlußleitungszugangsmultiplexers DSLAM veranlaßt aufgrund dieser Managementinformation das Einspeichern der Pseudo-Hardwareadresse a:b:c in der Pseudo-Hardwareadreßspeichereinrichtung PHM der Teilnehmeranschlußleitungsdatensatzspeichereinrichtung TALDM, die dem Teilnehmeranschlußleitungsport TAL-PRT zugeordnet ist.

Beim Initialisieren der in Figur 3 dargestellten Netzabschlußeinheit IAD der Endgeräteanordnung EA, d.h., wenn diese Netzabschlußeinheit IAD mit Energie versorgt wird bzw. physikalisch über die Teilnehmeranschlußleitung mit dem Teilnehmeranschlußleitungsport TAL-PRT des Teilnehmeranschlußleitungszugangsmultiplexers DSLAM verbunden wird, wird die in der Pseudo-Hardwareadreßspeichereinrichtung PHM gespeicherte Pseudo-Hardwareadresse a:b:c über die Teilnehmeranschlußleitung TAL zur Netzabschlußeinheit IAD übermittelt und von der Steuereinheit MP der Netzabschlußeinheit IAD in die Pseudo-Hardwarespeichereinrichtung PHMx der Netzabschlußeinheit IAD gespeichert.

Wenn die Endgeräteanordnung EA eine dynamische IP-Adresse benötigt, prüft die Steuereinheit MP der Netzabschlußeinheit IAD, ob in der Pseudo-Hardwarespeichereinrichtung PHMx eine Pseudo-Hardwareadresse gespeichert ist. Wenn ja, liest die Steuereinheit MP diese Pseudo-Hardwareadresse a:b:c aus und verwendet sie in einer IP-Adreßanforderungsmeldung BOOTP REQUEST, die über die Kommunikationsschnittstelle KIF der Netzabschlußeinheit IAD und die Teilnehmeranschlußleitung TAL zu einem in Figur 1 gezeigten Bootstrap-Protokollserver BOOTP-S übermittelt wird.

Enthält die Pseudo-Hardwarespeichereinrichtung PHMx keine Pseudo-Hardwareadresse, liest die Steuereinheit MP eine in dem Hardwareadreßspeicher HM gespeicherte Hardwareadresse aus und verwendet diese in einer IP-Adreßanforderungsmeldung BOOTP REQUEST. Durch diese Funktionalität kann eine solche Endgeräteanordnung sowohl in Netzabschnitten verwendet werden, die per Pseudo-Hardwareadresse konfiguriert sind, als auch in in bisher üblicher Weise konfigurierten Netzabschnitten. Eine solche Endgeräteanordnung kann folglich in bestehenden Netzen verwendet werden und ermöglicht es, zu einem späteren Zeitpunkt eine ein erfindungsgemäßes Verfahren erfordernde Netzkonfiguration vorzunehmen.

## Patentansprüche

1. Verfahren zum Ermitteln einer IP-Adresse, die einer über eine Teilnehmeranschlußleitung (TAL) eines Telekommunikationsnetzes (ATM/SDH, DSLAM, TAL, IPER) an ein IP-Netz (IPR1, IPR2, IPR3, IPER, NMS) angeschlossenen Endgeräteanordnung (EA) eindeutig zugeordnet ist, mit folgenden Schritten:
- Zuteilung einer eindeutigen Kennung (a:b:c) zu der Endgeräteanordnung von einer Netzmanagementeinrichtung (NMS, EM) des IP-Netzes,
- Speichern der Kennung (a:b:c) im Peripheriebereich (DSLAM, IAD) des Telekommunikationsnetzes (ATM/SDH, DSLAM, TAL) und in einer Netzmanagementeinheit (BOOTP-S) zum Zuweisen von IP-Adressen,
- Zuweisen einer IP-Adresse (x.x.x) durch die Netzmanagementeinheit (BOOTP-S) unter Berücksichtigung der in der Netzmanagementeinheit (BOOTP-S) gespeicherten Kennung (a:b:c),
- Senden einer IP-Adreßanforderungsmeldung an die Netzmanagementeinheit (BOOTP-S), wobei die Meldung die zuvor im Peripheriebereich gespeicherte Kennung (a:b:c) enthält,
- Senden der zugewiesenen IP-Adresse (x.x.x) von der Netzmanagementeinheit (BOOTP-S) an die Endgeräteanordnung als Antwort auf die empfangene IP-Adreßanforderungsmeldung.

2. Verfahren nach Anspruch 1,
bei dem die Kennung im Peripheriebereich (DSLAM, IAD) des Telekommunikationsnetzes (ATM/SDH, DSLAM, TAL, IPER) in einem mehreren Teilnehmeranschlußleitungen (TLAO, TAL, TALn) zugeordneten Netzelement (DSLAM) gespeichert wird und beim Initialisieren der Endgeräteanordnung zur Endgeräteanordnung übermittelt wird.

3. Verfahren nach Anspruch 2,
bei dem die Kennung (a:b:c) als Teil eines Teilnehmeranschlußleitungsdatensatzes gespeichert wird.

4. Verfahren nach einem der vorhergehenden Ansprüche,
bei dem die Kennung (a:b:c) in der Endgeräteanordnung - insbesondere permanent oder temporär - gespeichert wird.

5. Verfahren nach einem der vorhergehenden Ansprüche,
bei dem die Kennung (a:b:c) beim Konfigurieren eines Teilnehmeranschlusses der Endgeräteeinrichtung gespeichert wird.

6. Verfahren nach einem der vorhergehenden Ansprüche,
bei dem die bei IP-Adressanforderungen zu sendende IP-Adresse (x.x.x) bei Speichern der Kennung (a:b:c) in der Netzmanagementeinheit (BOOTP-S) fest zugewiesen wird.

7. Erzeugnis, umfassend Mittel, die zur Durchführung aller Schritte eines Verfahrens nach einem der vorstehenden Verfahrensansprüche eingerichtet sind.

8. Erzeugnis, ausgebildet als Netzmanagementeinheit (BOOTP-S) zum Zuweisen von IP-Adressen, umfassend Mittel
- zum Speichern einer eindeutigen, zu einer Endgeräteanordnung von einer Netzmanagementeinrichtung (NMS, EM) eines IP-Netzes zugeteilten Kennung (a:b:c),
- zum Zuweisen einer IP-Adresse (x.x.x) unter Berücksichtigung der in der Netzmanagementeinheit (BOOTP-S) gespeicherten Kennung (a:b:c),
- zum Empfangen einer an die Netzmanagementeinheit (BOOTP-S) gesendeten IP-Adressanforderungsmeldung, wobei die Meldung eine zuvor in einem Peripheriebereich (DSLAM, IAD) gespeicherte Kennung enthält, und
- zum Senden der zugewiesenen IP-Adresse (x.x.x) an die Endgeräteanordnung als Antwort auf die empfangene IP-Adressanforderungsmeldung.

9. Erzeugnis nach Anspruch 8, ausgebildet als Computerprogrammprodukt, dessen Programmcode zur Durchführung des Verfahrens von zumindest einem Prozessor ausgeführt wird.

## Claims

1. Method for determining an IP address that is uniquely assigned to a terminal arrangement (EA) connected to an IP network (IPR1, IPR2, IPR3, IPER, NMS) via a subscriber line (TAL) of a telecommunications network (ATM/SDH, DSLAM, TAL, IPER),
having the following steps:
- assignment of a unique identifier (a:b:c) to the terminal arrangement by a network management device (NMS, EM) of the IP network;
- storage of the identifier (a:b:c) in the peripheral area (DSLAM, IAD) of the telecommunications network (ATM/SDH, DSLAM, TAL) and in a network management unit (BOOTP-S) for allocating IP addresses;
- allocation of an IP address (x.x.x) by the network management unit (BOOTP-S) taking account of the identifier (a:b:c) stored in the network management unit (BOOTP-S);
- sending of an IP address request message to the network management unit (BOOTP-S), which message contains the identifier (a:b:c:) previously stored in the peripheral area;
- sending of the allocated IP address (x.x.x) by the network management unit (BOOTP-S) to the terminal arrangement as a response to the received IP address request message.

2. Method according to Claim 1,
in which the identifier in the peripheral area (DSLAM, IAD) of the telecommunications network (ATM/SDH, DSLAM, TAL, IPER) is stored in a network element (DSLAM) assigned to a plurality of subscriber lines (TAL0, TAL, TALn) and is sent to the terminal arrangement on initialization of the terminal arrangement.

3. Method according to Claim 2,
in which the identifier (a:b:c) is stored as part of a subscriber line data record.

4. Method according to one of the preceding claims,
in which the identifier (a:b:c) is stored - in particular permanently or temporarily - in the terminal arrangement.

5. Method according to one of the preceding claims,
in which the identifier (a:b:c) is stored during configuration of a subscriber line of the terminal arrangement.

6. Method according to one of the preceding claims,
in which the IP address (x.x.x) to be sent for IP address requests is permanently allocated during storage of the identifier (a:b:c) in the network management unit (BOOTP-S).

7. Product, comprising means for carrying out all the steps of a method according to one of the preceding method claims.

8. Product, designed as a network management unit (BOOTP-S) for allocating IP addresses, comprising means
- for storing a unique identifier (a:b:c) assigned to a terminal arrangement by a network management device (NMS, EM) of an IP network;
- for allocating an IP address (x.x.x) taking account of the identifier (a:b:c) stored in the network management unit (BOOTP-S);
- for receiving an IP address request message sent to the network management unit (BOOTP-S), which message contains an identifier previously stored in a peripheral area (DSLAM, IAD); and
- for sending the allocated IP address (x.x.x) to the terminal arrangement as a response to the received IP address request message.

9. Product according to Claim 8, designed as a computer program product, the program code of which is executed by at least one processor in order to carry out the method.

## Revendications

1. Procédé pour déterminer une adresse IP, qui est attribuée univoquement à un agencement de terminaux (EA) raccordé par une ligne d'abonné (TAL) d'un réseau de télécommunication (ATM/SDH, DSLAM, TAL, IPER) à un réseau IP (IPR1, IPR2, IPR3, IPER, NMS),
comprenant les étapes suivantes :
- attribution d'un code univoque (a:b:c) à l'agencement de terminaux par un dispositif de gestion de réseau (NMS, EM) du réseau IP,
- mémorisation du code (a:b:c) dans la zone périphérique (DSLAM, IAD) du réseau de télécommunication (ATM/SDH, DSLAM, TAL) et dans une unité de gestion de réseau (BOOTP-S) pour l'attribution d'adresses IP,
- attribution d'une adresse IP (x.x.x) par l'unité de gestion de réseau (BOOTP-S) compte tenu du code (a:b:c) mémorisé dans l'unité de gestion de réseau (BOOTP-S),
- envoi d'un message de demande d'adresse IP à l'unité de gestion de réseau (BOOTP-S), le message contenant le code (a:b:c) stocké auparavant dans la zone périphérique,
- envoi de l'adresse IP (x.x.x) attribuée par l'unité de gestion de réseau (BOOTP-S) à l'agencement de terminaux comme réponse au message de demande d'adresse IP reçu.

2. Procédé selon la revendication 1,
dans lequel le code est mémorisé dans la zone périphérique (DSLAM, IAD) du réseau de télécommunication (ATM/SDH, DSLAM, TAL, IPER) dans un élément de réseau (DSLAM) attribué à plusieurs lignes d'abonnés (TAL0, TAL, TALn) et est transmis à l'agencement de terminaux lors de l'initialisation de l'agencement de terminaux.

3. Procédé selon la revendication 2,
dans lequel le code (a:b:c) est mémorisé comme partie d'un ensemble de données de ligne d'abonné.

4. Procédé selon l'une quelconque des revendications précédentes,
dans lequel le code (a:b:c) est mémorisé dans l'agencement de terminaux, en particulier de façon permanente ou temporaire.

5. Procédé selon l'une quelconque des revendications précédentes,
dans lequel le code (a:b:c) est mémorisé lors de la configuration d'une ligne d'abonné du dispositif de terminaux.

6. Procédé selon l'une quelconque des revendications précédentes,
dans lequel l'adresse IP (x.x.x) à envoyer en cas de demandes d'adresse IP est attribuée de façon fixe lors de la mémorisation du code (a:b:c) dans l'unité de gestion de réseau (BOOTP-S).

7. Produit, comprenant des moyens qui sont mis en place pour la réalisation de toutes les étapes d'un procédé selon l'une quelconque des revendications précédentes.

8. Produit, conçu comme unité de gestion de réseau (BOOTP-S) pour l'attribution d'adresses IP, comprenant des moyens
- pour la mémorisation d'un code (a:b:c) univoque, attribué à un agencement de terminaux par un dispositif de gestion de réseau (NMS, EM) d'un réseau IP,
- pour l'attribution d'une adresse IP (x.x.x) compte tenu du code (a:b:c) mémorisé dans l'unité de gestion de réseau (BOOTP-S),
- pour la réception d'un message de demande d'adresse IP envoyé à l'unité de gestion de réseau (BOOTP-S), le message contenant un code mémorisé auparavant dans une zone périphérique (DSLAM, IAD), et
- pour l'envoi de l'adresse IP (x.x.x) attribuée à l'agencement de terminaux comme réponse au message de demande d'adresse IP reçu.

9. Produit selon la revendication 8, conçu comme produit de programme informatique, dont le code de programme est exécuté pour la mise en oeuvre du procédé par au moins un processeur.
